# EUROPÄISCHE PATENTSCHRIFT

(11) **EP 1 215 235 B1**
(45) Veröffentlichungstag und Bekanntmachung des Hinweises auf die Patenterteilung: **19.05.2004**
(21) Anmeldenummer: 01128569.9
(22) Anmeldetag: 30.11.2001
(51) Int. Cl.: C08K 13/06, C08L 21/00, C09C 1/30, C09C 3/00, C01B 33/00

(54) **Kautschukmischung und Kieselsäure für eine Kautschukmischung**
Rubber composition and silica for rubber composition
Composition de caoutchouc et silice pour composition de caoutchouc

(30) Priorität: 16.12.2000 DE 10062945
(43) Veröffentlichungstag der Anmeldung: 19.06.2002
(73) Patentinhaber: Continental Aktiengesellschaft, 30165 Hannover (DE)
(72) Erfinder: Meier, Martin, Dr., 59457 Werl (DE); Gehrmann, Torsten, 57200 Sarreguemines (FR)

(56) Entgegenhaltungen:
- US-A- 2 829 981
- US-A- 4 289 681
- US-A- 5 723 529

## Beschreibung

Die Erfindung betrifft schwefelvernetzbare Kautschukmischungen, insbesondere für die Herstellung von Laufstreifen für Reifen, enthaltend 100 Gewichtsteile zumindest eines Dienkautschuks und bezogen auf 100 Gewichtsteile Gesamtkautschuk 5 bis 100 Gewichtsteile Ruß und 5 bis 100 Gewichtsteile Kieselsäure sowie weitere übliche Zusatzstoffe. Ferner betrifft die Erfindung Kieselsäuren für Kautschukmischungen, Verfahren zur Herstellung der Kautschukmischungen sowie Reifen, deren Laufstreifen zumindest zum Teil aus den mit Schwefel vulkanisierten Kautschukmischungen bestehen.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche durchgeführt, die Laufstreifenmischungen hinsichtlich ihrer Polymerkomponenten und ihrer Füllstoffe zu variieren. Es ist beispielsweise bekannt, der Kautschukmischung als Füllstoffe Ruß und/oder Kieselsäure zuzusetzen. Dabei hat der Einsatz kieselsäurehaltiger Mischungen auch in anderen Verwendungsbereichen Einzug gefunden, z. B. bei Antriebsriemen, Transportbändern usw.
Eines der Ziele die bei der Reifenentwicklung im Vordergrund stehen, ist die Verringerung des Rollwiderstandes, was einen verminderten Kraftstoffverbrauch mit sich bringt. Durch den Einsatz von Kieselsäure enthaltenden Mischungen kann der Rollwiderstand gegenüber Mischungen, die nur Ruß enthalten, verbessert werden. Gleichzeitig sollte idealerweise keine Verschlechterung der anderen Reifeneigenschaften, wie Nassgriff und Abrieb beobachtet werden.

Da die Verteilung der Kieselsäure, die eine große spezifische hydrophile Oberfläche aufweist, in der Kautschukmischung und die Art der Kieselsäure einen Einfluss auf die Reifeneigenschaften haben, wurden schon verschiedene Versuche unternommen, Kieselsäure vorzubehandeln, zu modifizieren oder der Mischung spezielle Zusatzstoffe hinzuzufügen, um eine optimale Verteilung und optimale Reifeneigenschaften zu bewirken. Bevorzugt werden zur Verstärkung von Kautschukmischungen feinverteilte Fällungskieselsäuren eingesetzt. Eine hinlänglich bekannte Methode zur Verbesserung der Verarbeitbarkeit und damit der Verteilung der Kieselsäure in der Mischung, ist die Verwendung von bifunktionenellen Organosilanen (Kupplungsagenzien), die gleichzeitig zur Hydrophobierung der Kieselsäureoberfläche auch eine chemische Anbindung an Kautschuke ermöglichen.

Aus der EP 0 631 982 A2 ist es bekannt, Aggregate für die Verstärkung von Kautschukmischungen und insbesondere Laufstreifenmischungen herzustellen, die ähnlich zu Kieselsäurepartikeln sind, bei denen aber ein Teil der Siliciumatome durch andere Atome, wie z. B. Aluminium, Eisen, Magnesium, Bor, Titan usw., ersetzt ist. Die Herstellung der Aggregate erfolgt durch Reaktion zumindest zweier anorganischer Materialien, von denen eines Siliciumdioxid und das andere ein Oxid und/oder Salz von Aluminium, Eisen, Magnesium, Bor, Phosphor usw. ist, mit einer starken Base. Es entsteht eine wässrige Lösung eines Reaktionsproduktes, welches in den folgenden Herstellungsschritten durch Zugabe von Mineralsäuren ausgefällt, abfiltriert und gewaschen wird.

In der DE 27 16 225 A1 ist eine spezielle borhaltige Fällungskieselsäure beschrieben, die hergestellt wird, indem man Wasserglaslösung und Säure in eine Vorlage aus Wasser gibt, die ausgefallene Fällungskieselsäure abtrennt und wäscht, eine wässrige schwach saure, gegebenenfalls erwärmte Borsäurelösung hinzugibt und die Fällungskieselsäure trocknet und vermahlt. Diese Fällungskieselsäuren werden als Füllstoff in zu Elastomeren härtbaren Massen auf der Basis von Di-organo-polysiloxanen z. B. für Springkitte verwendet. Sie sollen den Vorteil aufweisen, dass bei der Herstellung der Organopolysiloxan-Elastomere keine flüchtigen Borverbindungen freigesetzt werden, die toxisch sein können.

Der vorliegenden Erfindung liegt nun die Aufgabe zugrunde, mit Kieselsäure verstärkte Kautschukmischungen zu schaffen, deren Vulkanisate einen verringerten Rollwiderstand und als Reifenlaufstreifen zumindest gleichbleibenden Nassgriff und gleichbleibende Wintereigenschaften aufweisen.

Gelöst wird diese Aufgabe erfindungsgemäß dadurch, dass die Oberfläche der Kieselsäure durch Reaktion mit Borsäure bei Temperaturen oberhalb von 200 °C modifiziert ist.

Ferner wird die Aufgabe dadurch gelöst, dass die Oberfläche der Kieselsäure durch Reaktion mit zumindest einem Borsäureester und/oder zumindest einem Borhalogenid bei Temperaturen oberhalb von 25 °C modifiziert ist.

Es zeigte sich überraschenderweise, dass im Vergleich zu herkömmlichen Kieselsäuren derartig modifizierte Kieselsäuren, wenn sie zur Verstärkung in Kautschukmischungen verwendet werden, zu Vulkanisaten mit einem verringerten Rollwiderstand führen. Die Ursache für diese Verringerung könnte darin bestehen, dass die genannten borhaltigen Verbindungen bei den angegebenen Temperaturen mit den zugänglichen OH-Gruppen an der Oberfläche der Kieselsäure reagieren oder kondensieren und dadurch die Füllstoff-Füllstoff-Wechselwirkungen (Kieselsäure-Kieselsäure-Wechselwirkung) verstärkt werden. Eine derartige Verstärkung führt zu einer Verringerung des Rollwiderstandes.

Als Borsäureester B(OR)₃ können die Ester der Borsäure verwendet werden, in denen R ein verzweigter oder unverzweigter Alkylrest mit 1 bis 4 Kohlenstoffatomen ist. Bei den Borhalogeniden kann es sich um Bortribromid, Bortrichlorid oder Bortrifluorid handeln.

Gemäß bevorzugten Weiterbildungen der Erfindung werden die Borsäure, der Borsäureester und/oder das Borhalogenid vor der Reaktion in Form einer Lösung auf die Oberfläche der Kieselsäure aufgebracht. Dies stellt vom notwendigen technischen Aufwand her eine einfache Form der Aufbringung dar.

Je nach verwendeter borhaltiger Substanz wird ein entsprechendes Lösungsmittel ausgewählt, in welchem die Substanz gut löslich ist. Bei den Lösungsmitteln kann es sich beispielsweise um Wasser oder organische Lösungsmittel wie z. B. Alkohole handeln.

Die Borsäure wird bevorzugt in Form einer wässrigen, gesättigten Lösung aufgebracht. Dies stellt sowohl im Hinblick auf die borhaltige Verbindung als auf das Lösungsmittel eine kostengünstige und toxikologisch unbedenklichere Variante dar. Wohingegen für die Borsäureester und die Borhalogenide unpolare organische Lösungsmittel bevorzugt werden, da in diesen Lösungsmitteln keine Hydrolyse stattfindet.

Der Borgehalt der modifizierten Kieselsäure beträgt vorzugsweise 2 bis 10 Gew.-%. Bei einem solchen Borgehalt wurde ein besonders hoher positiver Einfluss auf den Rollwiderstand verzeichnet.

Grundsätzlich kann jede dem Fachmann bekannte Kieselsäure, die als Füllstoff in der Kautschukindustrie verwendet werden kann, mit den erfindungsgemäßen borhaltigen Substanzen modifiziert werden. Besonders bevorzugt ist es allerdings, wenn zur Modifizierung eine feinverteilte, gefällte Kieselsäure verwendet wird, die eine Stickstoff-Oberfläche (BET-Oberfläche) (gemäß DIN 66131 und 66132) von 35 bis 350 m²/g, vorzugsweise von 145 bis 270 m²/g, eine CTAB-Oberfläche (gemäß ASTM D 3765) von 30 bis 350 m²/g, vorzugsweise von 120 bis 285 m²/g, ein Porenvolumen (gemäß DIN 66133) von 0,2 bis 3,4 mL/g, vorzugsweise von 0,7 bis 1,7 mL/g, einen mittleren Teilchendurchmesser von 10 bis 150 µm, vorzugsweise 10 bis 100 µm, und eine DBP-Zahl (gemäß ASTM D 2414) von 50 bis 300 mL/100 g, vorzugsweise von 150 bis 250 mL/100 g, aufweist. Derartige Kieselsäuren führen z. B. in Kautschukmischungen für Reifenlaufstreifen zu besonders guten physikalischen Eigenschaften der Vulkanisate. Außerdem können sich Vorteile in der Mischungsverarbeitung durch eine Verringerung der Mischzeit bei gleichbleibenden Produkteigenschaften ergeben, die zu einer verbesserten Produktivität führen. Als Kieselsäuren mit den genannten physikalischen Eigenschaften können z. B. jene des Typs VN3 (Handelsname) der Firma Degussa zum Einsatz kommen.

Die schwefelvernetzbare Kautschukmischung enthält zumindest einen Dienkautschuk. Dienkautschuke sind alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk, synthetischem Polyisopren, Polybutadien, Styrol-Butadien-Copolymer, Acrylnitril-Butadien-Kautschuk und Copolymeren und Pfropfpolymeren aus Styrol, Butadien und weiteren ungesättigten polaren Monomeren. Diese Dienelastomere lassen sich gut zu der erfindungsgemäßen Kautschukmischung verarbeiten und zeigen gute Vulkanisateigenschaften.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 %. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 %.
Mit Naturkautschuk läßt sich das Verarbeitungsverhalten verbessern und Rohfestigkeit, Konfektionsklebrigkeit, Kerbfestigkeit und Weiterreißfestigkeit der Vulkanisate nehmen zu.

Enthält die Kautschukmischung als Dienkautschuk Polybutadien (BR), kann es sich dabei sowohl um cis-1,4- als auch um vinyl-Polybutadien (40-90 % Vinyl-Anteil) handeln. Bevorzugt ist die Verwendung von cis-1,4-Polybutadien mit einem cis-1,4-Anteil größer 90 %, weiches z. B. durch Lösungspolymerisation in Anwesenheit von Katalysatoren vom Typ der seltenen Erden hergestellt werden kann. Solche cis-1,4-Polybutadiene besitzen niedrige Glastemperaturen, was sich z. B. bei daraus hergestellten Laufstreifen von Reifen positiv auf Rollwiderstand, Abrieb und Wintereigenschaften auswirkt.

Bei dem Styrol-Butadien-Copolymer kann es sich um lösungspolymerisiertes Styrol-Butadien-Copolymer (S-SBR) mit einem Styrolgehalt von ca. 10 bis 45 Gew.-% und einem 1,2-Anteil von 10 bis 70 % handeln, welches zum Beispiel unter Verwendung von Lithiumalkylen in organischem Lösungsmittel hergestellt werden kann. Der Einsatz von S-SBR, z. B. in Laufstreifen von Reifen mit Kieselsäure als Füllstoff, bietet die Vorteile von verringertem Rollwiderstandes und Wärmeaufbau bei dynamischer Wechselbeanspruchung (Heat-build-up) aufgrund geringerer Hysterese. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wäßriger Emulsion erhalten wurden, verwendet werden. E-SBR in Mischungen kann im Vergleich zu S-SBR Verbesserungen bei der Verarbeitung mit sich bringen.

Die verwendeten Styrol-Butadien-Copolymere können auch Copolymere und Pfropfpolymerisate mit weiteren ungesättigten polaren Monomeren sein, die z. B. Hydroxyl-, Carboxyl- oder Nitrilgruppen enthalten. Die Herstellung dieser Styrol-Butadien-Copolymere erfolgt z. B. dadurch, dass bei der Polymerisationsreaktion ungesättigte Carbonsäuren, Acrylnitril oder andere Substanzen mit polaren Gruppen mit einpolymerisiert werden. Man erhält auf diese Weise z. B. carboxylgruppenhaltige Styrol-Butadien-Copolymere (XSBR) oder Acrylnitril-Butadien-Styrol-Terpolymere (NSBR, andere Abkürzung: ABS). Derartige modifizierte Styrol-Butadien-Copolymere können zu einem sehr guten Nassgriff bei höheren Temperaturen beitragen.

Die für die Kautschukmischung verwendbaren Acrylnitril-Butadien-Kautschuke (NBR) werden durch Emulsionspolymerisation hergestellt, sie können Acrylnitril-Gehalte von 10 bis 60 Gew.-% aufweisen. Vulkanisate mit diesen Kautschuken zeichnen sich durch gute Abriebsbeständigkeit aus. Die Acrylnitril-Butadien-Kautschuke können auch teilhydriert sein (HNBR).

Zusätzlich zu den genannten Kautschuken kann die Mischung aber auch noch andere Kautschuktypen wie z. B. Styrol-Isopren-Butadien-Terpolymer, Butylkautschuk, Halobutylkautschuk, epoxidierten Naturkautschuk, hydroxylierten Naturkautschuk und Ethylen-Propylen-Dien-Kautschuk (EPDM) enthalten.

Die erfindungsgemäße Kautschukmischung enthält 5 bis 100 phr, vorzugsweise 5 bis 30 phr, Ruß. Der Zusatz von Ruß bringt verarbeitungstechnische Vorteile. Die verwendeten Ruße sollten insbesondere folgende Charakteristika aufweisen: DBP-Zahl (ASTM D 2414) 90 bis 200 mL/100 g und CTAB-Zahl (ASTM D 3765) von 80 bis 170 m²/g. Das Verhältnis der Füllstoffe Kieselsäure zu Ruß kann vorteilhafterweise größer oder gleich 3 zu 1 sein.

Zur Verbesserung der Verarbeitbarkeit und zur Anbindung der Kieselsäure an den Kautschuk kann man Silan-Kupplungsagenzien in Kautschukmischungen einsetzen. Die Silan-Kupplungsagenzien reagieren mit den oberflächlichen Silanolgruppen der Kieselsäure während des Mischens des Kautschuks bzw. der Kautschukmischung (in situ) oder bereits vor der Zugabe der Kieselsäure zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit dem Polymer eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagens z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. Die Silan-Kupplungsagenzien werden in Mengen von 0,2 bis 30 Gewichtsteilen, vorzugsweise 1 bis 15 Gewichtsteilen, bezogen auf 100 Gewichtsteile Kieselsäure eingesetzt, da dann eine optimale Anbindung der Kieselsäure an den oder die Kautschuke erfolgen kann.

Die erfindungsgemäßen Kautschukmischungen können neben Kieselsäure und Ruß weitere dem Fachmann bekannte Füllstoffe, wie beispielsweise Aluminiumoxide, Alumosilicate, Kreide, Stärke, Magnesiumoxid, Titandioxid oder Kautschukgele, enthalten.

Des Weiteren kann die erfindungsgemäße Kautschukmischung übliche Zusatzstoffe in üblichen Gewichtsteilen enthalten. Zu diesen Zusatzstoffen zählen Alterungsschutzmittel, wie z. B. N-Phenyl-N'-(1,3-dimethylbutyl)-p-phenylendiamin (6PPD), N-Isopropyl-N'phenyl-*p*-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Verarbeitungshilfsmittel und Weichmacher, wie z. B. Zinkoxid und Fettsäuren wie Stearinsäure, aromatische, naphthenische und/oder paraffinische Prozeßöle, Rapsöl und Wachse, und Mastikationshilfsmittel wie z. B. 2,2'-Dibenzamidodiphenyldisulfid (DBD).

Die Vulkanisation wird in Anwesenheit von Schwefel oder Schwefelspendern durchgeführt, wobei einige Schwefelspender zugleich als Vulkanisationsbeschleuniger wirken können. Als Schwefelspender können dabei beispielsweise Thiuramderivate wie Tetramethylthiuramdisulfid und Dipentamethylenthiuramtetrasulfid, Morpholinderivate wie Dimorpholyldisulfid, Dimorpholyltetrasulfid und 2-Morpholinodithiobenzothiazol sowie Caprolactamdisulfid verwendet werden. Schwefel oder Schwefelspender werden im letzten Mischungschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung vulkanisationsbeeinflussende Substanzen, wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid, Guanidinbeschleuniger wie z. B. Diphenylguanidin, Thiurambeschleuniger wie z. B. Tetrabenzylthiuramdisulfid, Dithiocarbamatbeschleuniger wie z. B. Zinkdibenzyldithiocarbamat, Aminbeschleuniger wie z. B. Cyclohexylethylamin, Thioharnstoffe wie z. B. Ethylenthioharnstoff, Xanthogenatbeschleuniger, Disulfide. Die Beschleuniger können auch in Kombination miteinander eingesetzt werden, wobei sich synergistische Effekte ergeben können.

Eine Kautschukmischung mit modifizierter Kieselsäure kann hergestellt werden, indem zumindest folgende Schritte durchgeführt werden:
a) Auflösen von Borsäure in einem Lösungsmittel, vorzugsweise Wasser oder Alkohol,
b) Zugabe der Kieselsäure zu der Lösung mit Borsäure und Rühren für mindestens 5 min., vorzugsweise bei Raumtemperatur,
c) Abfiltrieren oder Verdampfen des Lösungsmittels,
d) Erhitzen des Filterkuchens aus Kieselsäure mit anhaftender Borsäure auf eine Temperatur > 200 °C über mindestens 1 h zur Modifizierung der Oberfläche der Kieselsäure durch Reaktion mit der Borsäure,
e) Mischen von zumindest einem Dienelastomer, Ruß und der modifizierten Kieselsäure sowie den üblicherweise verwendeten Zusätzen mit Ausnahme des Vulkanisationssystems unter gleichzeitigem Erwärmen der Zusammensetzung auf eine Temperatur bis zu 180 °C in einem oder mehreren Schritten,
f) Zumischen des Vulkanisationssytems bei Temperaturen unterhalb der Vulkanisationstemperatur.

Alternativ dazu kann eine Kautschukmischung mit modifizierter Kieselsäure hergestellt werden, indem zumindest folgende Schritte durchgeführt werden:
a) Auflösen von zumindest einem Borsäureester und/oder zumindest einem Borhalogenid in einem Lösungsmittel,
b) Zugabe der Kieselsäure zu der Lösung mit dem Borsäureester und/oder Borhalogenid und Rühren für mindestens 5 min., vorzugsweise bei Raumtemperatur,
c) Abfiltrieren oder Verdampfen des Lösungsmittels,
d) Erhitzen des Filterkuchens aus Kieselsäure mit anhaftendem Borsäureester und/oder Borhalogenid auf eine Temperatur > 25 °C über mindestens 1 h zur Modifizierung der Oberfläche der Kieselsäure durch Reaktion mit dem Borsäureester und/oder dem Borhalogenid,
e) Mischen von zumindest einem Dienelastomer, Ruß und der modifizierten Kieselsäure sowie den üblicherweise verwendeten Zusätzen mit Ausnahme des Vulkanisationssystems unter gleichzeitigem Erwärmen der Zusammensetzung auf eine Temperatur bis zu 180 °C in einem oder mehreren Schritten,
f) Zumischen des Vulkanisationssytems bei Temperaturen unterhalb der Vulkanisationstemperatur.

Nach dem Schritt d) kann sich bei beiden Verfahren noch ein Waschschritt anschließen, bei dem die modifizierte Kieselsäure mit dem reinen Lösungsmittel gewaschen und dann in einem Temperaturbereich von 80 bis 150 °C und über einen Zeitraum von maximal 48 h getrocknet wird.

Es ist aber auch möglich, dass die Reaktion der Kieselsäure mit anhaftender Borsäure, anhaftendem Borsäureester und/oder Borhalogenid direkt im Mischer stattfindet. Für die Borsäure setzt dies allerdings Mischungssysteme voraus, die ein Mischen bei diesen Temperaturen oberhalb von 200 °C erlauben.

Das Mischen oder Einmischen der Substanzen erfolgt auf herkömmliche Art und Weise in dem Fachmann bekannten Mischapparaturen, z. B. einem Innenmischer. Dann wird die Kautschukmischung weiterverarbeitet, z. B. durch einen Extrusionsvorgang, und in die entsprechende Form z. B. eines Laufstreifenrohlings gebracht. Ein so erzeugter Laufstreifenmischungsrohling wird bei der Herstellung des Reifenrohlings, insbesondere Fahrzeugluftreifenrohlings, wie bekannt aufgelegt.
Nach der Vulkanisation weisen die erhaltenen Produkte gegenüber herkömmlichen Produkten einen verringerten Rollwiderstand auf. Werden die vulkanisierten Kautschukmischungen in Fahrzeugluftreifen als Laufstreifenmischung verwendet, bleiben gleichzeitig der Nassgriff und die Wintereigenschaften auf gutem Niveau. Die Kautschukmischungen können aber auch z. B. für Transportbänder, Antriebsriemen, Dichtungen, Schläuche und Schuhsohlen Verwendung finden.

Wird die erfindungsgemäße Kautschukmischung in Reifen mit niedrigem Rollwiderstand verwendet, ist es unerheblich, ob der gesamte Laufstreifen aus einer einzigen Mischung hergestellt worden ist oder z. B. einen Cap- und Base-Aufbau aufweist, denn wichtig ist, dass zumindest die mit der Fahrbahn in Berührung kommende Fläche oder ein Teil dieser Fläche aus der erfindungsgemäßen Kautschukmischung hergestellt worden ist.

Die Erfindung soll nun anhand eines Ausführungsbeispiels näher erläutert werden, ohne jedoch auf dieses Beispiel beschränkt zu sein.

### Modifizierung der Kieselsäure:

Es wurde eine wässrige, gesättigte Borsäurelösung hergestellt und zu einem Liter dieser Lösung wurden unter Rühren 150 g des Granulates einer feinverteilten, gefällten Kieselsäure des Typs Ultrasil VN3 (Handelsname) der Firma Degussa gegeben. Im Anschluss wurde für eine halbe Stunde bei Raumtemperatur gerührt. Die Kieselsäure mit anhaftender Borsäure wurde abfiltriert und zur Durchführung der Reaktion oder Kondensation in einem Trockenschrank 4,5 h auf 250 °C erhitzt. Die modifizierte Kieselsäure wurde mit Wasser gewaschen und über 24 h in Trockenschrank bei 100 °C getrocknet.

Mit dieser modifizierten Kieselsäure wurde eine Kautschukmischung gemäß der Tabelle 1 in einer herkömmlichen Mischapparatur hergestellt. Als Vergleich wurde eine Mischung mit der unmodifizierten Kieselsäure hergestellt.

Bei sämtlichen in der Tabelle 1 enthaltenen Mischungsbeispielen sind die angegebenen Mengenangaben Gewichtsteile, die auf 100 Gewichtsteile Gesamtkautschuk bezogen sind (phr).

Die beiden Mischungen wurden bei 160 °C vulkanisiert und der Vulkanisationsprozess über ein rotorloses Vulkameter (MDR = Moving Disc Rheometer) gemäß DIN 53 529 verfolgt. Daraus wurden die Umsatzzeiten bis zum Erreichen der relativen Vernetzungsgrade von 10, 40 und 90 % (t₁₀, t₄₀, t₉₀) ermittelt.

Außerdem wurde die Mooney-Viskosität der Mischungen gemäß DIN 53 523 mit einem Scherscheiben-Viskosimeter bei 100 °C ermittelt.

Aus den Mischungen wurden Prüfkörper durch 20-minütige Vulkanisation in einer Presse bei 160 °C hergestellt und mit diesen danach für die Kautschukindustrie typische Materialeigenschaften bestimmt. Für die Tests an Prüfkörpem wurden folgende Testverfahren angewandt:
- Zugfestigkeit bei Raumtemperatur gemäß DIN 53 504
- Bruchdehnung bei Raumtemperatur gemäß DIN 53 504
- Spannungswert bei 100, 200 und 300 % Dehnung bei Raumtemperatur gemäß DIN 53 504
- Shore-A-Härte bei Raumtemperatur und 70 °C gemäß DIN 53 505
- Rückprallelastizität bei Raumtemperatur und 70 °C gemäß DIN 53 512
- Verlustfaktor tan δ bei -40, -20, 0 und 60 °C gemäß DIN 53 513

Die tan δ-Werte bei -40 und -20 °C lassen Rückschlüsse auf die Wintereigenschaften zu und der tan δ bei 0 °C kann mit dem Nassgriff korreliert werden. Aus dem tan δ bei 60 °C kann man auf den Rollwiderstand eines Vulkanisates, z. B. eines Fahrzeugluftreifens, schließen. Ordnet man dem Rollwiderstand des Vulkanisats der Mischung mit der nicht modifizierten Kieselsäure den Wert 100 zu, so bedeuten Werte > 100 eine Verbesserung und damit Verminderung des Rollwiderstandes.

Die ermittelten Werte der Materialeigenschaften finden sich in Tabelle 2.

**Tabelle 1**

| **Bestandteile** | **Einheit** | **Vergleichsmischung** | **erfindungsgemäße Mischung** |
|---|---|---|---|
| Naturkautschuk | phr | 10 | 10 |
| cis-1,4-Polybutadien^{a} | phr | 45 | 45 |
| S-SBR^{b} | phr | 61,876 | 61,876 |
| Kieselsäure unmodifiziert | phr | 80 | - |
| Kieselsäure modifiziert | phr | - | 80 |
| Ruß N339 | phr | 10 | 10 |
| Aromatische Öle | phr | 11,12 | 11,12 |
| Rapsöl | phr | 5 | 5 |
| Alterungsschutzmittel | phr | 2 | 2 |
| Ozonschutzwachs | phr | 2 | 2 |
| Zinkoxid | phr | 2 | 2 |
| Stearinsäure | phr | 1 | 1 |
| Verarbeitungshilfsmittel | phr | 4 | 4 |
| Silan-Kupplungsagenz auf Ruß^{c} | phr | 12,5 | 12,5 |
| Beschleuniger | phr | 4 | 4 |
| Schwefel | phr | 1,7 | 1,7 |

| | | | |
|---|---|---|---|
| ^{a}cis-1,4-Polybutadien, Bayer AG, Deutschland | | | |
| ^{b} lösungspolymerisiertes Styrol-Butadien-Copolymer verstreckt mit 37,5 Teilen Öl auf 100 Teile Kautschuk, VSL-0525-1, Bayer AG, Deutschland | | | |
| ^{c} X50S, Degussa AG, Deutschland | | | |

**Tabelle 2**

| **Materialeigenschaften** | **Einheit** | **Vergleichsmischung** | **erfindungsgemäße Mischung** |
|---|---|---|---|
| t₁₀ | min | 1,72 | 2,19 |
| t₄₀ | min | 3,43 | 3,91 |
| t₉₀ | min | 6,86 | 5,96 |
| Mooney-Viskosität ML (1+3) 100 °C | | 62,5 | 62,2 |
| Zugfestigkeit bei RT | MPa | 15,8 | 15,1 |
| Bruchdehnung bei RT | % | 459 | 464 |
| Spannungswert 100 % | MPa | 2,41 | 2,29 |
| Spannungswert 200 % | MPa | 5,69 | 5,29 |
| Spannungswert 300 % | MPa | 10,04 | 9,38 |
| Shore-A-Härte bei RT | Shore A | 68 | 64,9 |
| Shore-A-Härte bei 70 °C | Shore A | 65 | 62,2 |
| Rückprallelastizität bei RT | % | 35,2 | 37,2 |
| Rückprallelastizität bei 70 °C | % | 47,3 | 51 |
| tan δ bei -40 °C | | 0,256 | 0,263 |
| tan δ bei -20 °C | | 0,443 | 0,445 |
| tan δ bei 0 °C | | 0,378 | 0,387 |
| tan δ bei 60 °C | | 0,168 | 0,159 |
| Rollwiderstand | | 100 | 106 |

Das Vulkanisat aus der Mischung mit der modifizierten Kieselsäure zeigt bei im Vergleich zum Vulkanisat der Mischung mit der herkömmlichen Kieselsäure einen geringeren tan δ bei 60 °C, dieser geringe Verlustfaktor bewirkt z. B. bei Verwendung der Mischung in einem Reifenlaufstreifen einen verringerten Rollwiderstand. Die tan δ-Werte bei -40 und -20 °C bleiben nahezu gleich. Dies kann man mit gleichbleibenden Wintereigenschaften korrelieren. Der tan δ bei 0 °C verbleibt bei der erfindungsgemäßen Mischung ebenfalls auf gleichem Niveau und zeigt an, dass der Nassgriff durch die Verwendung der modifizierten Kieselsäure nicht negativ, sondern eher positiv beeinflusst wird. Die in der Tabelle 2 dargestellte erfindungsgemäße Mischung weist zusätzlich den Vorteil auf, dass die Zeit bis zu einem Vernetzungsgrad von 90 % kürzer ist, als bei der Vergleichsmischung. Die Heizzeit für Vulkanisate aus der erfindungsgemäßen Mischung kann verkürzt werden und die Produktivität kann gesteigert werden.

## Patentansprüche

1. Schwefelvernetzbare Kautschukmischung, insbesondere für die Herstellung von Laufstreifen für Reifen, enthaltend 100 Gewichtsteile zumindest eines Dienkautschuks und bezogen auf 100 Gewichtsteile Gesamtkautschuk 5 bis 100 Gewichtsteile Ruß und 5 bis 100 Gewichtsteile Kieselsäure sowie weitere übliche Zusatzstoffe,
**dadurch gekennzeichnet,**
**dass** die Oberfläche der Kieselsäure durch Reaktion mit Borsäure bei Temperaturen oberhalb von 200 °C modifiziert ist.

2. Kautschukmischung nach Anspruch 1, **dadurch gekennzeichnet, dass** die Borsäure vor der Reaktion in Form einer Lösung auf die Oberfläche der Kieselsäure aufgebracht wird.

3. Kautschukmischung nach Anspruch 2, **dadurch gekennzeichnet, dass** die Borsäure in Form einer wässrigen, gesättigten Lösung aufgebracht wird.

4. Schwefelvernetzbare Kautschukmischung, insbesondere für die Herstellung von Laufstreifen für Reifen, enthaltend 100 Gewichtsteile zumindest eines Dienkautschuks und bezogen auf 100 Gewichtsteile Gesamtkautschuk 5 bis 100 Gewichtsteile Ruß und 5 bis 100 Gewichtsteile Kieselsäure sowie weitere übliche Zusatzstoffe, **dadurch gekennzeichnet, dass** die Oberfläche der Kieselsäure durch Reaktion mit zumindest einem Borsäureester und/oder zumindest einem Borhalogenid bei Temperaturen oberhalb von 25 °C modifiziert ist.

5. Kautschukmischung nach Anspruch 4, **dadurch gekennzeichnet, dass** der Borsäureester und/oder das Borhalogenid vor der Reaktion in Form einer Lösung auf die Oberfläche der Kieselsäure aufgebracht wird.

6. Kautschukmischung nach zumindest einem der vorhergehenden Ansprüche, **dadurch gekennzeichnet, dass** der Borgehalt der modifizierten Kieselsäure 2 bis 10 Gew.-% beträgt.

7. Kautschukmischung nach zumindest einem der vorhergehenden Ansprüche, **dadurch gekennzeichnet, dass** zur Modifizierung eine feinverteilte, gefällte Kieselsäure verwendet wird, die eine Stickstoff-Oberfläche von 35 bis 350 m²/g, eine CTAB-Oberfläche von 30 bis 350 m²/g, ein Porenvolumen von 0,2 bis 3,4 mL/g, einen mittleren Teilchendurchmesser von 10 bis 150 µm und eine DBP-Zahl von 50 bis 300 mL/100 g aufweist.

8. Kautschukmischung nach zumindest einem der vorhergehenden Ansprüche, **dadurch gekennzeichnet, dass** der Dienkautschuk oder die Dienkautschuke ausgewählt ist bzw. sind aus der Gruppe, bestehend aus Naturkautschuk, synthetischem Polyisopren, Polybutadien, Styrol-Butadien-Copolymer, Acrylnitril-Butadien-Kautschuk und Copolymeren und Pfropfpolymeren aus Styrol, Butadien und weiteren ungesättigten polaren Monomeren.

9. Kieselsäure für Kautschukmischungen, **dadurch gekennzeichnet, dass** deren Oberfläche durch Reaktion mit Borsäure bei Temperaturen oberhalb von 200 °C modifiziert ist.

10. Kieselsäure nach Anspruch 9, **dadurch gekennzeichnet, dass** die Borsäure vor der Reaktion in Form einer Lösung auf die Oberfläche der Kieselsäure aufgebracht wird.

11. Kieselsäure nach Anspruch 10, **dadurch gekennzeichnet, dass** die Borsäure in Form einer wässrigen, gesättigten Lösung aufgebracht wird.

12. Kieselsäure für Kautschukmischungen, **dadurch gekennzeichnet, dass** deren Oberfläche durch Reaktion mit zumindest einem Borsäureester und/oder zumindest einem Borhalogenid bei Temperaturen oberhalb von 25 °C modifiziert ist.

13. Kieselsäure nach Anspruch 10, **dadurch gekennzeichnet, dass** der Borsäureester und/oder das Borhalogenid vor der Reaktion in Form einer Lösung auf die Oberfläche der Kieselsäure aufgebracht wird.

14. Kieselsäure nach zumindest einem der Ansprüche 9 bis 13, **dadurch gekennzeichnet, dass** der Borgehalt der modifizierten Kieselsäure 2 bis 10 Gew.-% beträgt.

15. Verfahren zur Herstellung einer Kautschukmischung gemäß Anspruch 1, **gekennzeichnet durch** zumindest folgende Schritte:
a) Auflösen von Borsäure in einem Lösungsmittel, vorzugsweise Wasser oder Alkohol,
b) Zugabe der Kieselsäure zu der Lösung mit Borsäure und Rühren für mindestens 5 min., vorzugsweise bei Raumtemperatur,
c) Abfiltrieren oder Verdampfen des Lösungsmittels,
d) Erhitzen des Filterkuchens aus Kieselsäure mit anhaftender Borsäure auf eine Temperatur > 200 °C über mindestens 1 h zur Modifizierung der Oberfläche der Kieselsäure **durch** Reaktion mit der Borsäure,
e) Mischen von zumindest einem Dienelastomer, Ruß und der modifizierten Kieselsäure sowie den üblicherweise verwendeten Zusätzen mit Ausnahme des Vulkanisationssystems unter gleichzeitigem Erwärmen der Zusammensetzung auf eine Temperatur bis zu 180 °C in einem oder mehreren Schritten,
f) Zumischen des Vulkanisationssytems bei Temperaturen unterhalb der Vulkanisationstemperatur.

16. Verfahren zur Herstellung einer Kautschukmischung gemäß Anspruch 4, **gekennzeichnet durch** zumindest folgende Schritte:
a) Auflösen von zumindest dem Borsäureester und/oder zumindest einem Borhalogenid in einem Lösungsmittel,
b) Zugabe der Kieselsäure zu der Lösung mit einem Borsäureester und/oder Borhalogenid und Rühren für mindestens 5 min., vorzugsweise bei Raumtemperatur,
c) Abfiltrieren oder Verdampfen des Lösungsmittels,
d) Erhitzen des Filterkuchens aus Kieselsäure mit anhaftendem Borsäureester und/oder Borhalogenid auf eine Temperatur > 25 °C über mindestens 1 h zur Modifizierung der Oberfläche der Kieselsäure **durch** Reaktion mit dem Borsäureester und/oder dem Borhalogenid,
e) Mischen von zumindest einem Dienelastomer, Ruß und der modifizierten Kieselsäure sowie den üblicherweise verwendeten Zusätzen mit Ausnahme des Vulkanisationssystems unter gleichzeitigem Erwärmen der Zusammensetzung auf eine Temperatur bis zu 180 °C in einem oder mehreren Schritten,
f) Zumischen des Vulkanisationssytems bei Temperaturen unterhalb der Vulkanisationstemperatur.

17. Reifen, dessen Laufstreifen zumindest zum Teil aus einer mit Schwefel vulkanisierten Kautschukmischung nach zumindest einem der Ansprüche 1 bis 8 besteht.

## Claims

1. Sulphur-cross-linkable rubber mixture, more especially for the production of tread strips for tyres, said mixture containing 100 parts by weight at least of a diene rubber and, in relation to 100 parts by weight total rubber, 5 to 100 parts by weight carbon black and 5 to 100 parts by weight silica, as well as further customary additives,
**characterised in that**
the surface of the silica is modified by reacting with boric acid at temperatures above 200°C.

2. Rubber mixture according to claim 1, **characterised in that** the boric acid is applied in the form of a solution to the surface of the silica before the reaction.

3. Rubber mixture according to claim 2, **characterised in that** the boric acid is applied in the form of an aqueous, saturated solution.

4. Sulphur-cross-linkable rubber mixture, more especially for the production of tread strips for tyres, said mixture containing 100 parts by weight at least of a diene rubber and, in relation to 100 parts by weight total rubber, 5 to 100 parts by weight carbon black and 5 to 100 parts by weight silica, as well as further customary additives,
**characterised in that** the surface of the silica is modified by reacting with at least one boric acid ester and/or at least one boron halide at temperatures above 25°C.

5. Rubber mixture according to claim 4, **characterised in that** the boric acid ester and/or the boron halide is applied in the form of a solution to the surface of the silica before the reaction.

6. Rubber mixture according to at least one of the preceding claims, **characterised in that** the boron content of the modified silica is 2 to 10 wt-%.

7. Rubber mixture according to at least one of the preceding claims, **characterised in that** a finely dispersed, precipitated silica is used for modifying, which has a nitrogen surface of 35 to 350 m²/g, a CTAB surface of 30 to 350 m²/g, a pore volume of 0.2 to 3.4 mL/g, a mean particle diameter of 10 to 150 µm and a DBP number of 50 to 300 mL/100 g.

8. Rubber mixture according to at least one of the preceding claims, **characterised in that** the diene rubber or diene rubbers is or are selected from the group comprising natural rubber, synthetic polyisoprene, polybutadiene, styrene-butadiene-copolymer, acrylonitrile-butadiene-rubber and copolymers and graft polymers formed from styrene, butadiene and further unsaturated polar monomers.

9. Silica for rubber mixtures, **characterised in that** its surface is modified by reacting with boric acid at temperatures above 200°C.

10. Silica according to claim 9, **characterised in that** the boric acid is applied in the form of a solution to the surface of the silica before the reaction.

11. Silica according to claim 10, **characterised in that** the boric acid is applied in the form of an aqueous, saturated solution.

12. Silica for rubber mixtures, **characterised in that** its surface is modified by reacting with at least one boric acid ester and/or at least one boron halide at temperatures above 25°C.

13. Silica according to claim 10, **characterised in that** the boric acid ester and/or the boron halide is applied in the form of a solution to the surface of the silica before the reaction.

14. Silica according to at least one of claims 9 to 13, **characterised in that** the boron content of the modified silica is 2 to 10 wt-%.

15. Method for producing a rubber mixture according to claim 1, **characterised by** at least the following steps:
a) dissolving boric acid in a solvent, preferably water or alcohol,
b) adding silica to the solution with boric acid and stirring for at least 5 min, preferably at room temperature,
c) filtering off or evaporating the solvent,
d) heating the filter cake, comprising silica with adhering boric acid, to a temperature >200°C over at least 1 hour to modify the surface of the silica by reaction with the boric acid,
e) mixing at least one diene elastomer, carbon black and the modified silica as well as the customarily used additives, with the exception of the vulcanisation system, with simultaneous heating of the composition to a temperature of up to 180°C in one or more steps,
f) admixing the vulcanisation system at temperatures below the vulcanisation temperature.

16. Method for producing a rubber mixture according to claim 4, **characterised by** at least the following steps:
a) dissolving at least the boric acid ester and/or at least one boron halide in a solvent,
b) adding silica to the solution with a boric acid ester and/or boron halide and stirring for at least 5 min, preferably at room temperature,
c) filtering off or evaporating the solvent,
d) heating the filter cake, comprising silica with adhering boric acid ester and/or boron halide, to a temperature >25°C over at least 1 hour to modify the surface of the silica by reaction with the boric acid ester and/or the boron halide,
e) mixing at least one diene elastomer, carbon black and the modified silica as well as the customarily used additives, with the exception of the vulcanisation system, with simultaneous heating of the composition to a temperature of up to 180°C in one or more steps,
f) admixing the vulcanisation system at temperatures below the vulcanisation temperature.

17. Tyre, the tread strip of which is formed at least partially from a rubber mixture, vulcanised with sulphur, according to at least one of claims 1 to 8.

## Revendications

1. Mélange de caoutchouc réticulable au soufre, en particulier pour la fabrication de bandes de roulement pour des pneumatiques, contenant 100 parties en poids d'au moins un caoutchouc diénique et, par rapport à 100 parties en poids du caoutchouc total, contenant 5 à 100 parties en poids de noir de carbone et 5 à 100 parties en poids d'acide silique, ainsi que d'autres additifs habituels,
**caractérisé**
**en ce que** la surface de l'acide silique est modifiée par réaction avec de l'acide borique, à des températures supérieures à 200°C.

2. Mélange de caoutchouc selon la revendication 1, **caractérisé en ce que** l'acide borique, avant la réaction, est appliqué sur la surface de l'acide silique, sous la forme d'une solution.

3. Mélange de caoutchouc selon la revendication 2, **caractérisé en ce que** l'acide borique est appliqué sous la forme d'une solution aqueuse et saturée.

4. Mélange de caoutchouc réticulable au soufre, en particulier pour la fabrication de bandes de roulement pour des pneumatiques, contenant 100 parties en poids d'au moins un caoutchouc diénique et, par rapport à 100 parties en poids du caoutchouc total, contenant 5 à 100 parties en poids de noir de carbone et 5 à 100 parties en poids d'acide silique, ainsi que d'autres additifs habituels,
**caractérisé en ce que** la surface de l'acide silique est modifiée par réaction avec au moins un ester d'acide borique et/ou avec au moins un halogénure de bore, à des températures supérieures à 25°C.

5. Mélange de caoutchouc selon la revendication 4, **caractérisé en ce que** l'ester d'acide borique et/ou l'halogénure de bore, avant la réaction, est appliqué sur la surface de l'acide silique, sous la forme d'une solution.

6. Mélange de caoutchouc selon au moins l'une quelconque des revendications précédentes, **caractérisé en ce que** la teneur en bore de l'acide silique modifié varie entre 2 % en poids et 10 % en poids.

7. Mélange de caoutchouc selon au moins l'une quelconque des revendications précédentes, **caractérisé en ce que**, pour la modification, on utilise un acide silique précipité et finement divisé qui présente une surface d'azote de 35 m²/g à 350 m²/g, une surface CTAB de 30 m²/g à 350 m²/g, un volume poreux de 0,2 mL/g à 3,4 mL/g, un diamètre de particules moyen de 10 µm à 150 µm et un indice DBP de 50 mL/100 g à 300 mL/100 g.

8. Mélange de caoutchouc selon au moins l'une quelconque des revendications précédentes, **caractérisé en ce que** le caoutchouc diénique ou les caoutchoucs diéniques est ou sont choisi(s) parmi le groupe se composant de caoutchouc naturel, d'un polyisoprène synthétique, de polybutadiène, d'un copolymère à base de styrène et de butadiène, de caoutchouc à base d'acrylonitrile et de butadiène et de copolymères et de polymères greffés du styrène, du butadiène et d'autres monomères polaires insaturés.

9. Acide silique pour des mélanges de caoutchouc, **caractérisé en ce que** sa surface est modifiée par réaction avec de l'acide borique, à des températures supérieures à 200°C.

10. Acide silique selon la revendication 9, **caractérisé en ce que** l'acide borique, avant la réaction, est appliqué sur la surface de l'acide silique, sous la forme d'une solution.

11. Acide silique selon la revendication 10, **caractérisé en ce que** l'acide borique est appliqué sous la forme d'une solution aqueuse et saturée.

12. Acide silique pour des mélanges de caoutchouc, **caractérisé en ce que** sa surface est modifiée par réaction avec au moins un ester d'acide borique et/ou avec au moins un halogénure de bore, à des températures supérieures à 25°C.

13. Acide silique selon la revendication 10, **caractérisé en ce que** l'ester d'acide borique et/ou l'halogénure de bore, avant la réaction, est appliqué sur la surface de l'acide silique, sous la forme d'une solution.

14. Acide silique selon au moins l'une quelconque des revendications 9 à 13, **caractérisé en ce que** la teneur en bore de l'acide silique modifié varie entre 2 % en poids et 10 % en poids.

15. Procédé de fabrication d'un mélange de caoutchouc selon la revendication 1, **caractérisé par** au moins les étapes suivantes consistant :
a) à dissoudre de l'acide borique dans un solvant, de préférence dans de l'eau ou de l'alcool,
b) à ajouter de l'acide silique à la solution contenant de l'acide borique et à mélanger pendant au moins 5 minutes, de préférence à température ambiante,
c) à filtrer ou à évaporer le solvant,
d) à chauffer le cake de filtration composé d'acide silique et d'acide borique collant, à une température supérieure à 200°C pendant au moins 1 heure, pour obtenir la modification de la surface de l'acide silique par réaction avec de l'acide borique,
e) à mélanger au moins un élastomère diénique, le noir de carbone et l'acide silique modifié ainsi que les additifs utilisés habituellement, à l'exception du système de vulcanisation, et à chauffer en même temps la composition à une température allant jusqu'à 180°C, en une ou en plusieurs étapes,
f) à ajouter et à mélanger le système de vulcanisation, à des températures inférieures à la température de vulcanisation.

16. Procédé de fabrication d'un mélange de caoutchouc selon la revendication 4, **caractérisé par** au moins les étapes suivantes consistant :
a) à dissoudre au moins l'ester d'acide borique et/ou au moins un halogénure de bore dans un solvant,
b) à ajouter de l'acide silique à la solution contenant un ester d'acide borique et/ou un halogénure de bore et à mélanger pendant au moins 5 minutes, de préférence à température ambiante,
c) à filtrer ou à évaporer le solvant,
d) à chauffer le cake de filtration composé d'acide silique et d'ester d'acide borique collant et/ou d'halogénure de bore, à une température supérieure à 25°C pendant au moins 1 heure, pour obtenir la modification de la surface de l'acide silique par réaction avec l'ester d'acide borique et/ou avec l'halogénure de bore,
e) à mélanger au moins un élastomère diénique, le noir de carbone et l'acide silique modifié ainsi que les additifs utilisés habituellement, à l'exception du système de vulcanisation, et à chauffer en même temps la composition à une température allant jusqu'à 180°C, en une ou en plusieurs étapes,
f) à ajouter et à mélanger le système de vulcanisation, à des températures inférieures à la température de vulcanisation.

17. Pneumatique dont la bande de roulement se compose au moins, en partie, d'un mélange de caoutchouc vulcanisé avec du soufre selon au moins l'une quelconque des revendications 1 à 8.
